# EUROPÄISCHE PATENTSCHRIFT

(11) **EP 2 221 239 B1**
(45) Veröffentlichungstag und Bekanntmachung des Hinweises auf die Patenterteilung: **15.01.2014**
(21) Anmeldenummer: 10000413.4
(22) Anmeldetag: 18.01.2010
(51) Int. Cl.: B66F 9/075, B62D 5/04, B62D 1/14, B62D 5/00

(54) **Flurförderzeug**
Industrial truck
Chariot de manutention

(30) Priorität: 20.02.2009 DE 102009009927
(43) Veröffentlichungstag der Anmeldung: 25.08.2010
(73) Patentinhaber: STILL GmbH, 22113 Hamburg (DE)
(72) Erfinder: Mittmann, Heribert, 22359 Hamburg (DE)
(74) Vertreter: Geirhos, Johann

(56) Entgegenhaltungen:
- EP-A1- 0 694 432
- EP-A2- 1 316 491
- DE-B3- 10 338 611
- GB-A- 2 315 717

## Beschreibung

Die Erfindung betrifft ein Flurförderzeug mit einer einen elektrischen Lenkmotor umfassenden elektrischen Lenkungseinrichtung, die ein aus einer Ausgangslage auslenkbares Lenkbetätigungsmittel aufweist, wobei die Lenkungseinrichtung mit einer eine Dämpfungseinheit und ein Federsystem umfassende Rückstelleinrichtung zur Rückstellung des Lenkbetätigungsmittels in die Ausgangslage versehen ist, wobei keine mechanische Verbindung zwischen dem Lenkbetätigungsmittel und einem gelenkte Rad besteht.

Zur Lenkung von Flurförderzeugen kommen je nach Art und vorgesehenem Verwendungszweck des Flurförderzeugs unterschiedliche Lenkungseinrichtungen zum Einsatz. Beispielsweise sind bei Gegengewichtsgabelstaplern und Kommissioniergeräten als herkömmliche Lenkräder ausgebildete Lenkbetätigungsmittel mit mechanischer Übertragung der Lenkkräfte über eine Lenkstange auf gelenkte Räder des Flurförderzeugs üblich. Dabei können zur Lenkkraftunterstützung auch hydraulische oder elektrische bzw. elektrohydraulische Servolenkungen zum Einsatz kommen. Zudem sind vollhydraulische Lenkungseinrichtungen bekannt. Bei deichselgeführten Hubwagen besteht das Lenkbetätigungsmittel aus einer Lenkdeichsel, die zur Ausführung der Lenkbewegung um eine zumindest annähernd vertikale Achse schwenkbar ist. Die Schwenkbewegung der Lenkdeichsel wird bei einer herkömmlichen Ausführung des Hubwagens mittels einer mechanischen Verbindung auf mindestens ein lenkbares Rad des Hubwagens übertragen. Zur Lenkkraftunterstützung können auch hier elektrische, hydraulische oder elektrohydraulische Servolenkungen zum Einsatz kommen. Derartige Hubwagen sind beispielsweise in den Patentveröffentlichungen DE 10 2004 017 859 A1, DE 103 38 611 B3 und DE 197 38 586 B4 beschrieben.

Aus der DE 103 38 611 B3 ist ein deichselgeführtes Flurförderzeug mit einer elektrischen Lenkkraftunterstützung beschrieben. Die Lenkdeichsel ist an einem das Antriebsrad tragenden Lenkschemel in einer Lagergabel schwenkbar angelenkt, wobei an den Aufhängungspunkten der Lenkdeichsel am Lenkschemel Sensoren zur Ermittlung der an der Lenkdeichsel aufgebrachten Kräfte angebracht sind. Anhand der mit den Sensoren ermittelten Kräfte wird ein Lenkmotor angesteuert. In den Aufhängungspunkten sind zwischen der Lenkdeichsel und der Lagergabel elastisch nachgiebige Elemente angeordnet.

Weiter entwickelte Ausführungen von Flurförderzeugen besitzen eine elektrische Lenkung. Dabei wird die Schwenkbewegung des Lenkbetätigungsmittels von einem Wegsensor erfasst und die Lenkinformation elektrisch an einen Lenkmotor übertragen. Als Lenkmotor wird üblicherweise ein Elektromotor verwendet, der in Abhängigkeit von den übermittelten Lenkinformationen eine auf das lenkbare Rad bzw. die lenkbaren Räder des Flurförderzeugs wirkende Lenkkraft erzeugt. Bei derartigen elektrischen Lenkungen besteht zwischen dem Lenkbetätigungsmittel und dem gelenkten Rad keine mechanische Verbindung.

Häufig ist die Lenkungseinrichtung des Flurförderzeugs mit einer elektrischen Lenkung mit einer Rückstelleinrichtung zur Rückstellung des Lenkbetätigungsmittels in die Ausgangslage versehen. Insbesondere bei deichselgeführten Hubwagen mit elektrischer Lenkung ist üblicherweise ein Federsystem vorgesehen, das die ausgelenkte Deichsel wieder in die Ausgangslage zurückstellt. Zur Vermeidung einer zu abrupten Rückstellbewegung kommt eine Dämpfungseinheit zur Anwendung. Die Dämpfungseinheit umfasst in der Regel ein hydraulisches Dämpfungselement, das unter Ausnutzung der Viskosität eines Öls oder Fettes arbeitet. Die Dämpfungseigenschaften dieser hydraulischen Dämpfungselemente sind stark temperaturabhängig.

Bei Flurförderzeugen, die bei niedrigen Umgebungstemperaturen oder bei Umgebungsbedingungen mit hohen Temperaturschwankungen, beispielsweise innerhalb von Kühlhäusern, betrieben werden, tritt das Problem auf, dass die Funktionsfähigkeit der hydraulischen Dämpfungselemente eingeschränkt ist. Beispielsweise kann bei Flurförderzeugen, die in Kühlhäusern bei Temperaturen von unter -20°C betrieben werden, die Dämpfung zu stark sein, so dass die Rückstellung des Lenkbetätigungsmittels in die Ausgangslage nicht mehr mit der gewünschten Schnelligkeit oder gar nicht mehr zuverlässig funktioniert. Bei starken Temperaturschwankungen; wie sie z.B. bei wechselndem Betrieb des Flurförderzeugs innerhalb und außerhalb von Kühlhäusern auftreten, verändern sich die Dämpfungseigenschaften der hydraulischen Dämpfungselemente ständig, so dass das Lenkverhalten des Flurförderzeugs unberechenbar wird.

Aus der EP 1 316 491 A2 ist eine voll-elektrische Lenkung eines Fahrzeugs mit einem Joystick als Lenkbetätigungsmittel bekannt. Gemäß der Figur 15 sind zur Rückstellung des Joysticks in eine Neutralstellung bei abgestelltem, stromlosen Fahrzeug Federn vorgesehen. Um bei einer Betätigung des Joysticks im Betrieb des Fahrzeugs eine gewünschte Kraftrückmeldung an die den Joystick bedienende Hand der Bedienperson zu erzeugen, sind zusätzliche Elektromotoren vorgesehen, die im Zusammenspiel mit den Federn eine gewünschte Rückstellkraft für eine bestimmte Auslenkung des Joysticks erzeugen. Die Elektromotoren ermöglichen eine gewünschte Kraftrückmeldeeinrichtung (Force-Feedback) an dem betätigten Joystick.

Der vorliegenden Erfindung liegt die Aufgabe zugrunde, ein Flurförderzeug der eingangs genannten Art so auszugestalten, dass die Dämpfungseigenschaften der Dämpfungseinheit nur in geringem Maß temperaturabhängig sind.

Die Aufgabe wird erfindungsgemäß dadurch gelöst, dass die Dämpfungseinheit der Rückstelleinrichtung einen Elektromotor aufweist.

Die Rückstelleinrichtung verfügt über ein Federsystem zur Aufbringung der Rückstellkraft. Der Elektromotor der Dämpfungseinheit wirkt der Rückstellkraft des Federsystems entgegen, wodurch eine weichere Rückstellbewegung des Lenkbetätigungsmittels erreicht wird. Dabei liegt der Erfindung die Überlegung zugrunde, die üblicherweise bei Flurförderzeugen zum Einsatz kommenden, hydraulisch arbeitenden Dämpfungselemente durch ein Dämpfungselement zu ersetzen, das auf einem anderen Funktionsprinzip basiert, welches keine so starke Temperaturabhängigkeit zeigt. Erfindungsgemäß wird daher anstelle eines die Viskosität von Ölen oder Fetten ausnutzenden Dämpfungselements ein Elektromotor als Dämpfungselement verwendet. Durch die Ausführung des Dämpfungselements nach dem elektromotorischen Prinzip sind die Dämpfungseigenschaften nur in geringem Maß temperaturabhängig.

Mit besonderem Vorteil wird die Erfindung bei deichselgeführten Hubwagen mit einem als Lenkdeichsel ausgeführten Lenkbetätigungsmittel eingesetzt. Dabei steht der Elektromotor der Dämpfungseinheit mit der Lenkdeichsel in mechanischer Wirkverbindung.

Die Lenkbewegung wird über eine nichtmechanische Wirkverbindung auf das gelenkte Rad übertragen. Diese Variante kommt insbesondere bei elektrischen Lenkungen zum Einsatz. Dabei weist die Lenkungseinrichtung einen Sensor zur Erfassung der Lenkbewegung des Lenkbetätigungsmittels auf, der mit einem Lenkmotor zur Erzeugung einer Lenkkraft auf mindestens ein gelenktes Rad in Wirkverbindung steht. Üblicherweise wird als Lenkmotor ebenfalls ein Elektromotor verwendet. In diesem Fall weist die Lenkungseinrichtung also zwei Elektromotoren auf, einen für die Dämpfungseinheit der Rückstelleinrichtung des Lenkbetätigungsmittels und einen weiteren für die Erzeugung der Lenkkraft des gelenkten Rades bzw. der gelenkten Räder.

Gemäß einer Weiterbildung des Erfindungsgedankens übernimmt der Elektromotor der Dämpfungseinheit auch die Aufgabe der Erzeugung der Rückstellkraft. In diesem Fall wird der Elektromotor über eine Steuerungseinheit aktiv angesteuert, um nach einer Auslenkung des Lenkbetätigungsmittels aus der Ausgangslage eine gewünschte Rückstellkraft auf das Lenkbetätigungsmittel zur Rückstellung in die Ausgangslage auszuüben. Bei dieser Variante kann auf das Federsystem zur Erzeugung der Rückstellkraft verzichtet werden.

Vorzugsweise steht der Elektromotor der Dämpfungseinheit über mindestens ein Getriebe mit dem Lenkbetätigungsmittel in mechanischer Wirkverbindung. Beispielsweise kann der Elektromotor über ein beispielsweise als Zahnradgetriebe ausgebildetes Untersetzungsgetriebe an einen Lenkschemel der Lenkdeichsel angekoppelt sein.

Eine besonders bevorzugte Ausgestaltung der Erfindung sieht vor, dass die Dämpfungseinheit einen durch unterschiedliche elektrische Belastung des Elektromotors steuerbaren Dämpfungsgrad aufweist. Auf diese Weise kann der Dämpfungsgrad der Dämpfungseinheit gezielt und reaktionsschnell an wechselnde Anforderungen angepasst werden.

Zur Steuerung des Elektromotors kann dieser mit mindestens einem passiven elektrischen Bauelement, insbesondere einem elektrischen Widerstand und/oder einer Diode und/oder einer Z-Diode und/oder einem Varistor beschaltet sein.

Zusätzlich oder alternativ ist auch eine Beschaltung mit mindestens einem aktiven elektrischen Bauelement, insbesondere einem Transistor und/oder MOSFET und/oder IGBT, möglich.

Die Erfindung kann prinzipiell bei allen Flurförderzeugen mit einer eine Rückstelleinrichtung aufweisenden Lenkeinrichtung eingesetzt werden. Ganz besonders eignet sich die Erfindung für deichselgeführte Hubwagen mit elektrischer Lenkung.

Von Vorteil ist bei der erfindungsgemäßen Lösung insbesondere, dass durch die Anwendung des elektromotorischen Prinzips zur Dämpfung der Rückstellbewegung des Lenkbetätigungsmittels anstelle der bei herkömmlichen hydraulischen Dämpfungselementen angewandten Ausnutzung der Viskosität von Ölen oder Fetten nur eine äußerst geringe Temperaturabhängigkeit der Dämpfungseigenschaften gegeben ist. Dies ist besonders beim Einsatz des Flurförderzeugs bei tiefen Umgebungstemperaturen oder bei wechselnden Betriebstemperaturen, wie sie beispielsweise in Kühlhäusern vorkommen, von erheblichem Vorteil. Außerdem kann durch eine gezielte Beschaltung des Elektromotors eine bestimmte Dämpfungscharakteristik vorgegeben oder entsprechend den Anforderungen gesteuert und oder geregelt werden.

Weitere Vorteile und Einzelheiten der Erfindung werden anhand des in den schematischen Figuren dargestellten Ausführungsbeispiels näher erläutert. Hierbei zeigen
- Figur 1: ein erfindungsgemäßes Flurförderzeug in einer perspektivischen Ansicht
- Figur 2: die Lenkungseinrichtung in einer Prinzipdarstellung.

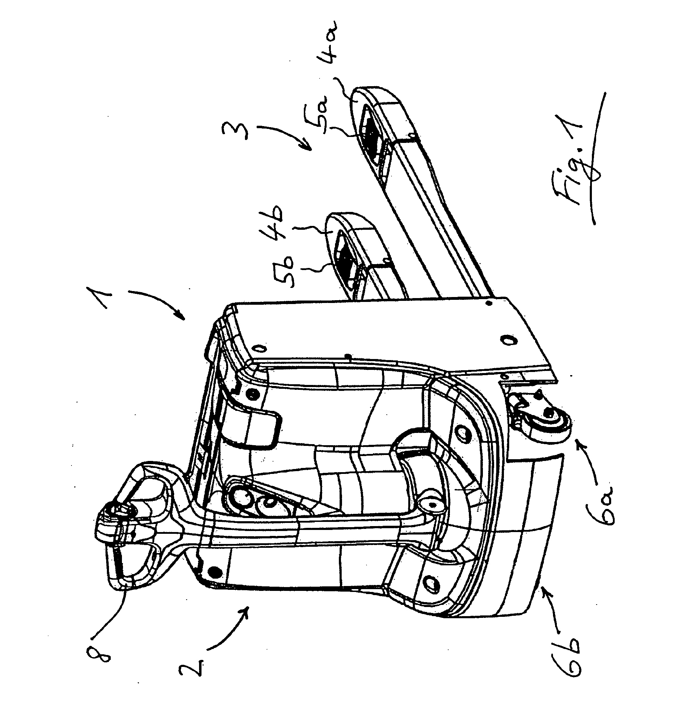

In Figur 1 ist ein als deichselgeführter Hubwagen ausgebildetes Flurförderzeug 1 in einer perspektivischen Ansicht dargestellt. Das Flurförderzeug 1 weist einen Antriebsteil 2 und einen relativ zum Antriebsteil 2 anhebbaren Lastteil 3 auf. Der Lastteil 3 verfügt über zwei seitlich beabstandete Lastarme 4a und 4b, die sich mit jeweils mindestens einer Lastrolle 5a, 5b auf einer Fahrbahn abstützen.

Im Antriebsteil 2 befinden sich die für den Antrieb des Flurförderzeugs erforderlichen Aggregate, beispielsweise ein elektrischer Fahrantriebsmotor, ein elektrischer Pumpenmotor und eine Hydraulikpumpe zur Versorgung einer hydraulischen Hubvorrichtung. Im Bereich des Antriebsteils 2 steht das Flurförderzeug 1 mit einem lenkbaren, in der dargestellten Ansicht nicht ersichtlichen Antriebsrad und mindestens einer Stützrolle 6a, 6b auf der Fahrbahn auf. Die Lenkung des Antriebsrads erfolgt mittels der um eine vertikale Achse schwenkbaren Lenkdeichsel 8, die ein Lenkbetätigungsmittel darstellt. Die Stützrollen 6a, 6b sind ebenfalls um eine vertikale Achse schwenkbar und passen damit ihre Laufrichtung automatisch an die momentane Fahrtrichtung des Flurförderzeugs an.

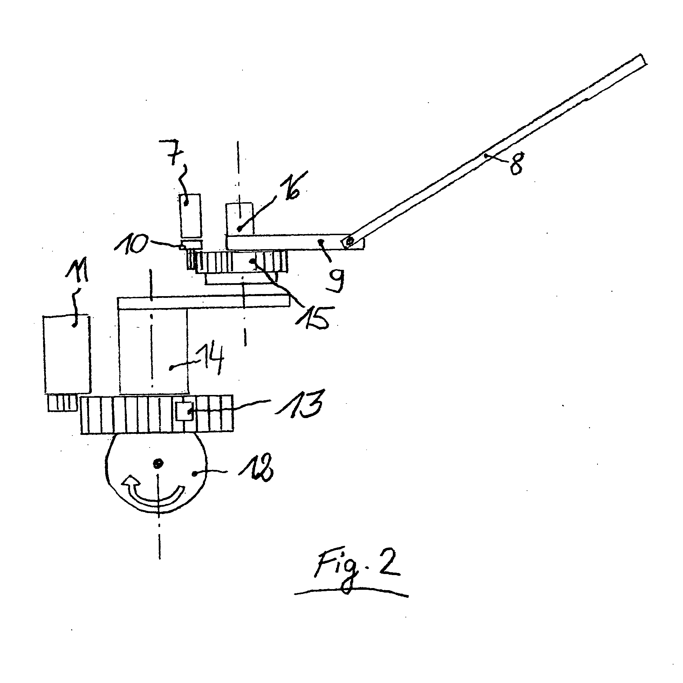

In Figur 2 ist die Lenkungseinrichtung des Flurförderzeugs gemäß Figur 1 mit elektrischer Lenkung in einer Prinzipskizze dargestellt. Die Lenkdeichsel 8 ist an einem Lenkschemel 9 angelenkt und mit diesem um eine vertikale Achse schwenkbar. Die Schwenkbewegung wird von einem in der Figur nicht gezeigten Wegsensor erfasst. Die Lenkinformation wird über eine elektrische Verbindung per Kabel oder drahtlos auf den Lenkmotor 11 übertragen. Über ein beispielsweise als Zahnradgetriebe ausgebildetes Untersetzungsgetriebe 13 ist der Lenkmotor 11 mit dem gelenkten Antriebsrad 12 gekoppelt. Beim Ausschwenken der Lenkdeichsel 8 wird also vom Wegsensor ein Lenksignal an den Lenkmotor 11 gesandt, der daraufhin über das Untersetzungsgetriebe 13 auf das Antriebsrad 12 eine Lenkkraft ausübt, so dass dieses dem Lenkbefehl der Lenkdeichsel folgt. Über dem Antriebsrad 12 ist der Fahrantriebsmotor 14 zum Antrieb des Antriebsrades 12 angeordnet.

Zur Rückstellung der Lenkdeichsel 8 in ihre Ausgangslage ist ein Federsystem 16 vorgesehen, das sich im Bereich des Lenkschemels 9 befindet. Um eine weitgehend temperaturunabhängige Dämpfung der Rückstellbewegung der Lenkdeichsel 8 zu erreichen, ist über ein als Zahnradgetriebe ausgebildetes Untersetzungsgetriebe 15 der Elektromotor 7 an den Lenkschemel 9 und somit die Lenkdeichsel 8 angekoppelt. Der Elektromotor 7 wirkt der Rückstellkraft des Federsystems 6 entgegen und sorgt so für eine weiche Rückstellbewegung. Elektromotor 7 und Untersetzungsgetriebe 15 bilden zusammen die Dämpfungseinheit der Lenkungseinheit zur Dämpfung der Rückstellbewegung des von der Lenkdeichsel 8 gebildeten Lenkbetätigungsmittels. Zur weiteren Untersetzung kann dem Elektromotor 7 ein weiteres Untersetzungsgetriebe 10 zugeordnet sein.

## Patentansprüche

1. Flurförderzeug (1) mit einer einen elektrischen Lenkmotor (11) umfassenden elektrischen Lenkungseinrichtung, die ein aus einer Ausgangslage auslenkbares Lenkbetätigungsmittel aufweist, wobei die Lenkungseinrichtung mit einer eine Dämpfungseinheit und ein Federsystem (16) umfassende Rückstelleinrichtung zur Rückstellung des Lenkbetätigungsmittels in die Ausgangslage versehen ist, wobei keine mechanische Verbindung zwischen dem Lenkbetätigungsmittel und einem gelenkte Rad (12) besteht, **dadurch gekennzeichnet, dass** die Dämpfungseinheit der Rückstelleinrichtung einen Elektromotor (7) aufweist.

2. Flurförderzeug nach Anspruch 1, **dadurch gekennzeichnet, dass** das Flurförderzeug als deichselgeführter Hubwagen mit einem als Lenkdeichsel (8) ausgeführten Lenkbetätigungsmittel ausgebildet ist, wobei der Elektromotor (7) der Dämpfungseinheit mit der Lenkdeichsel (8) in mechanischer Wirkverbindung steht.

3. Flurförderzeug nach Anspruch 1 oder 2, **dadurch gekennzeichnet, dass** die Lenkungseinrichtung einen Sensor zur Erfassung der Lenkbewegung des Lenkbetätigungsmittels aufweist, der mit dem Lenkmotor (11) zur Erzeugung einer Lenkkraft auf mindestens ein gelenktes Rad (12) in Wirkverbindung steht.

4. Flurförderzeug nach einem der Ansprüche 1 bis 3, **dadurch gekennzeichnet, dass** der Elektromotor (7) der Dämpfungseinheit über mindestens ein Getriebe (15) mit dem Lenkbetätigungsmittel in mechanischer Wirkverbindung steht.

5. Flurförderzeug nach einem der Ansprüche 1 bis 4, **dadurch gekennzeichnet, dass** die Dämpfungseinheit einen durch unterschiedliche elektrische Belastung des Elektromotors (7) steuerbaren Dämpfungsgrad aufweist.

6. Flurförderzeug nach einem der Ansprüche 1 bis 5, **dadurch gekennzeichnet, dass** der Elektromotor (7) mit mindestens einem passiven elektrischen Bauelement, insbesondere einem elektrischen Widerstand und/oder einer Diode und/oder einer Z-Diode und/oder einem Varistor beschaltet ist.

7. Flurförderzeug nach einem der Ansprüche 1 bis 6, **dadurch gekennzeichnet, dass** der Elektromotor (7) mit mindestens einem aktiven elektrischen Bauelement, insbesondere einem Transistor und/oder MOSFET und/oder IGBT beschaltet ist.

## Claims

1. Industrial truck (1) having an electrical steering device which comprises an electrical steering motor (11) and which has a steering operating means which can be deflected out of a starting position, with the steering device being provided with a return device, which comprises a damping unit and a spring system (16), for returning the steering operating means to the starting position, there being no mechanical connection between the steering operating means and a steered wheel (12), **characterized in that** the damping unit of the return device has an electric motor (7).

2. Industrial truck according to Claim 1, **characterized in that** the industrial truck is in the form of a tiller-steered lift truck having a steering operating means which is designed as a steering tiller (8), the electric motor (7) of the damping unit being mechanically operatively connected to the steering tiller (8).

3. Industrial truck according to Claim 1 or 2, **characterized in that** the steering device has a sensor for detecting the steering movement of the steering operating means, the said sensor being operatively connected to the steering motor (11) for generating a steering force on at least one steered wheel (12).

4. Industrial truck according to one of Claims 1 to 3, **characterized in that** the electric motor (7) of the damping unit is mechanically operatively connected to the steering operating means by means of at least one gear mechanism (15).

5. Industrial truck according to one of Claims 1 to 4, **characterized in that** the damping unit has a degree of damping which can be controlled by different electrical loading of the electric motor (7).

6. Industrial truck according to one of Claims 1 to 5, **characterized in that** the electric motor (7) is connected to at least one passive electrical component, in particular an electrical resistor and/or a diode and/or a zener diode and/or a varistor.

7. Industrial truck according to one of Claims 1 to 6, **characterized in that** the electric motor (7) is connected to at least one active electrical component, in particular a transistor and/or MOSFET and/or IGBT.

## Revendications

1. Chariot de manutention (1) comprenant un dispositif de direction électrique comprenant un moteur de direction électrique (11), qui présente un moyen de commande de direction pouvant être dévié d'une position de départ, le dispositif de direction étant pourvu d'un dispositif de rappel comprenant une unité d'amortissement et un système de suspension (16) pour ramener le moyen de commande de direction dans la position de départ, aucune liaison mécanique entre le moyen de commande de direction et une roue dirigée (12) n'existant, **caractérisé en ce que** l'unité d'amortissement du dispositif de rappel présente un moteur électrique (7).

2. Chariot de manutention selon la revendication 1, **caractérisé en ce que** le chariot de manutention est réalisé sous forme de chariot élévateur guidé par timon avec un moyen de commande de direction réalisé sous forme de timon de direction (8), le moteur électrique (7) de l'unité d'amortissement étant en liaison fonctionnelle mécanique avec le timon de direction (8).

3. Chariot de manutention selon la revendication 1 ou 2, **caractérisé en ce que** le dispositif de direction présente un capteur pour détecter le mouvement de direction du moyen de commande de direction, lequel est en liaison fonctionnelle avec le moteur de direction (11) pour produire une force de direction sur au moins une roue dirigée (12).

4. Chariot de manutention selon l'une quelconque des revendications 1 à 3, **caractérisé en ce que** le moteur électrique (7) de l'unité d'amortissement est en liaison fonctionnelle mécanique par le biais d'au moins une transmission (15) avec le moyen de commande de direction.

5. Chariot de manutention selon l'une quelconque des revendications 1 à 4, **caractérisé en ce que** l'unité d'amortissement présente un degré d'amortissement pouvant être commandé par une sollicitation électrique différente du moteur électrique (7).

6. Chariot de manutention selon l'une quelconque des revendications 1 à 5, **caractérisé en ce que** le moteur électrique (7) est branché avec au moins un composant électrique passif, notamment une résistance électrique et/ou une diode et/ou une diode Z et/ou une varistance.

7. Chariot de manutention selon l'une quelconque des revendications 1 à 6, **caractérisé en ce que** le moteur électrique (7) est branché avec au moins un composant électrique actif, en particulier un transistor et/ou un MOSFET et/ou un IGBT.
